# EUROPÄISCHE PATENTSCHRIFT

(11) **EP 1 561 554 B1**
(45) Veröffentlichungstag und Bekanntmachung des Hinweises auf die Patenterteilung: **17.09.2008**
(21) Anmeldenummer: 05002524.6
(22) Anmeldetag: 07.02.2005
(51) Int. Cl.: B27N 3/00, B32B 5/20

(54) **Holzwerkstoffplatte sowie ein Verfahren zum Herstellen einer Holzwerkstoffplatte**
Board consisting of a derived timber product and method for the production thereof
Plaque en matériau de bois et procédé de fabrication

(30) Priorität: 09.02.2004 DE 102004006385
(43) Veröffentlichungstag der Anmeldung: 10.08.2005
(73) Patentinhaber: Kronotec AG, 6006 Luzern (CH)
(72) Erfinder:
(74) Vertreter: Stornebel, Kai

(56) Entgegenhaltungen:
- DE-A1- 4 226 988
- GB-A- 1 069 171
- US-A- 5 554 429
- PATENT ABSTRACTS OF JAPAN Bd. 2003, Nr. 03, 5. Mai 2003 (2003-05-05) & JP 2002 338373 A (KOA FUNENBAN KOGYO KK), 27. November 2002 (2002-11-27)
- PATENT ABSTRACTS OF JAPAN Bd. 1998, Nr. 05, 30. April 1998 (1998-04-30) & JP 10 015920 A (GUN EI CHEM IND CO LTD), 20. Januar 1998 (1998-01-20)

## Beschreibung

Die Erfindung betrifft eine Holzwerkstoffplatte gemäß dem Oberbegriff des Patentanspruchs 1 sowie ein Verfahren zum Herstellen einer Holzwerkstoffplatte.

Eine Holzwerkstoffplatte der eingangs genannten Art ist z.B. aus der EP-A-1 253 257 bekannt.

Unter Holzwerkstoffplatten versteht man plattenförmiges Sperrholz, Holzspanplatten, wie Flachpressplatten, Strangpressplatten, OSB-Platten oder Spantischlerplatten, Holzfaserplatten, wie z. B. MDF- oder HDF-Fasern sowie andere Holzwerkstoffplatten, wie Schichtholzplatten, Sichtholzformteile oder auch Pressschichtholz. Insbesondere bei Holzwerkstoffplatten in der Möbelindustrie stellt sich das Problem, dass stabile Platten aufgrund ihrer Dicke relativ schwer sind, was insbesondere für Selbstaufbauer zu Transportproblemen führen kann.

Die JP 2002-338373 A1 beschreibt ein Verfahren zur Herstellung einer Holzzementplatte, die verbesserte Wärmedämmeigenschaften aufweist. In diesem Verfahren wird eine Mischung aus Holzrohmaterial und Zement in eine Form eingebracht. Auf diese erste Lage werden aufgeschäumte Harzperlen gestreut. Anschließend wird auf diese Schicht wieder eine Schicht aus Holzrohmaterial und Zement aufgebracht.

Dieses Vorprodukt wird in einer Presse verpresst, so dass das aufgeschäumte Harz in der Mittelschicht des Pressrohlings verbleibt. Anschließend wird der Pressrohling in einer Dampfpresse Hochtemperaturdampf ausgesetzt, so dass die aufgeschäumten Harzpartikel aushärten.

Die GB 1,069,171 beschreibt ein Verfahren zur Herstellung einer Sandwichplatte mit einer Kernlage aus aufgeschäumtem Kunststoff und Unterstützungslagen aus einer Faserzementzusammensetzung, die auf beiden Seiten aufgebracht werden kann, wobei die Unterstützungslagen auch aus einer Mischung aus Zement und Holzwolle bestehen können.

Die US 5,554,429 beschreibt eine Holzwerkstoffplatte mit einer Kernlage aus mindestens einer OSB-Platte, die mit einem aufschäumenden Klebstoff hergestellt worden und mit mindestens einer Deckschicht aus einer weiteren OSB-Platte versehen ist, wobei die Deckschicht mit einer Oberfläche der Kernlage verklebt ist. Das aufschäumende Harz kann beispielsweise ein Urethanharz sein. Die Herstellung der Platte erfolgt in einer Heißpresse bei einem Druck von ca. 1 bis 2 MPa und einer Temperatur in einem Bereich zwischen 150 und 200°C, wobei das Aufschäumen des Schaumharzes in der Presse erfolgt.

Die DE 42 26 988 A1 beschreibt ein Formteil aus mit einem geschäumten Kunstharz durchtränkten Naturfasern, das aus zwei Außenschichten aus Naturfasern und aus einer von den Außenschichten eingeschlossenen Mittelschicht besteht. Die Mittelschicht wird zumindest teilweise von einem geschäumten Kunstharz gebildet. Die Mittelschicht kann dabei unter anderem Holzspreißel, Holzschnitzel, Holzrinde sowie Nadeln von Koniferen als Füllstoff erhalten. Die Mischung aus Naturfasern für die Außenschichten und Kunstharz für die Mittelschicht wird in eine beheizte Form eingelegt. Nach dem Schließen der beheizten Form wird die Temperatur des Kunstharzes auf beispielsweise 60°C gebracht, wodurch das Harz aufschäumt und die Faserschichten durchsetzt.

Die EP 1 253 257 A1 beschreibt ein Verfahren zur Herstellung eines Flächenelementes sowie eine Holzwerkstoffplatte mit einer Schicht aus geschäumten Polystyrol zwischen zwei Holzwerkstoffplatten. Zwei fertige Holzwerkstoffplatten werden dazu mit Isolierplatten über einen Kleber verbunden.

Aufgabe der vorliegenden Erfindung ist es, eine leichte und stabile Holzwerkstoffplatte mit einer harten Oberfläche sowie ein Verfahren zu deren Herstellung bereitzustellen.

Erfindungsgemäß wird diese Aufgabe durch eine Holzwerkstoffplatte mit den Merkmalen des Anspruchs 1 sowie ein Verfahren mit den Merkmalen des Anspruchs 10 gelöst. V

orteilhafte Ausgestaltungen und Weiterbildungen der Erfindung sind in den Unteransprüchen aufgeführt.

Erfindungsgemäß sieht eine Holzwerkstoffplatte eine Schicht aus einem ausgeschäumten Kunststoff, die zwischen zwei Holzwerkstoffschichten aus Holzfasern oder Spänen angeordnet ist, vor, wobei die Kunststoffschicht den Kern der Holzwerkstoffplatte bildet, wobei die Ober- und Unterseite der Holzwerkstoffplatte aus Holzfasern oder Holzspänen ausgebildet sind und der Kern mit den Holzfasern oder Holzspänen vernetzt ist.

Zur Erzielung einer hohen Steifigkeit ist es vorgesehen, dass der Kunststoff im aufgeschäumten Zustand geschlossenporig ausgebildet ist, wobei zur Erzielung einer maximalen Stabilität nach dem Aufschäumen eine Aushärtung stattfindet. Der aufgeschäumte und ausgehärtete Kunststoff bildet dann eine Schicht geringerer Dichte im Verhältnis zu den sie umschließenden Holzwerkstoffschichten und stellt gleichzeitig eine hohe Festigkeit bereit.

Die Kunststoffe können aus Polyethylen oder Polyurethan bestehen und enthalten vorzugsweise Flammenschutzmittel, wie Melaminharz, Aluminiumhydroxit oder Ammoniumpolyphosphat. Andere Zuschlagstoffe oder Flammschutzmittel können dem aufzuschäumenden Kunststoff zugesetzt werden, um die Eigenschaften der Holzwerkstoffplatte an die jeweiligen Erfordernisse anzupassen.

Da Holzwerkstoffplatten in der Regel unter Druck und Zufuhr thermischer Energie hergestellt werden, ist es vorgesehen, dass der Kunststoff thermisch aktivierbar ist, also dass das innerhalb des Kunststoffes vorhandene Treibmittel anfängt zu reagieren. Über Energiezufuhr bzw. über ein Abkühlen der Holzwerkstoffplatte und damit auch der Kunststoffe kann die Aufschäumreaktion gesteuert werden, so dass der Grad der Aufschäumung über die Dauer der Temperatureinwirkung eingestellt werden kann. Das Treibmittel reagiert unter Zufuhr themischer Energie und schäumt der Kunststoff auf.

Die aufgeschäumte Kunststoffschicht kann als Kern ausgebildet sein, der von dem Holzwerkstoff umgeben ist, alternativ kann nur die Ober- und Unterseite der Kunststoffschicht von den Holzwerkstoffschichten abgedeckt sein. Als Holzwerkstoffe können dabei Sperrholz, Holzspäne, Holzfasern oder Schichtholz eingesetzt werden, wobei vorzugsweise Späne oder Holzfasern verwendet werden, um eine optimale Vernetzung zwischen den Holzwerkstoffen und dem aufgeschäumten Kunststoff zu erzielen. Aus Gründen der Symmetrie ist die Kunststoffschicht mittig innerhalb der Holzwerkstoffplatte angeordnet, sollten aus Festigkeitsüberlegungen abweichende Anordnungen bzw. Streudicken notwendig sein, kann dies selbstverständlich auch ausgeführt werden.

Eine Weiterbildung der Erfindung sieht vor, dass an einer Holzwerkstoffplatte Verriegelungseinrichtungen an den Seitenkanten angeordnet oder ausgebildet sind, so dass mehrere solcher Holzwerkstoffplatten mit Verriegelungseinrichtungen miteinander verbunden werden können. Neben den üblichen Nut- und Federverbindungen können formschlüssige Verriegelungen vorgesehen sein, die in vertikaler und horizontaler Richtung, also in der Plattenebene oder senkrecht zu der Plattenebene wirken.

Das erfindungsgemäße Verfahren zum Herstellen einer Holzwerkstoffplatte sieht vor, dass zwischen zwei Schichten aufgestreuter Holzfasern oder Späne eine Schicht aus einem aufschäumenden, aushärtenden Kunststoffgranulat eingebracht und der Kunststoff unter Zufuhr thermischer Energie aufgeschäumt und die Holzfasern oder Späne verdichtet und die auf der Ober- und Unterseite der Holzwerkstoffplatte angeordneten Holzfasern oder Holzspäne mit dem aufgeschäumten Kunststoff vernetzt werden. Dabei können die Holzwerkstoffschichten unterschiedliche Materialien aufweisen, beispielsweise sind an der Oberseite orientierte Späne für eine OSB-Optik und an der Unterseite Holzfasern für eine MDF- oder HDF-Platte aufgebracht.

Eine Möglichkeit des Einbringens des Kunststoffes bzw. des Kunststoffgranulates in das Innere einer Holzwerkstoffplatte sieht vor, dass zunächst eine erste Schicht eines Holzwerkstoffes aufgebracht wird und auf diesen eine Schicht aus Kunststoff bzw. Kunststoffgranulat aufgestreut wird. Anschließend werden beide Schichten von einer zweiten Holzwerkstoffschicht überdeckt, bevor der Kunststoff durch Zufuhr thermischer Energie aufgeschäumt wird. Die Holzwerkstoffschicht wird dabei entweder aufgelegt oder im Falle von Spänen oder Fasern aufgestreut bzw. aufgeschüttet.

Alternativ dazu ist vorgesehen, dass bei Span- oder Faserwerkstoffen diese als Span- oder Faserkuchen aufgestreut werden. Dieser Span- oder Faserkuchen wird z.B. von einem Dampfschwert geteilt, und in die Teilungsfuge zwischen oberer und unterer Schicht wird dann der Kunststoff bzw. das Kunststoffgranulat eingebracht.

Die Ausgangsstoffe für die zu fertigende Holzwerkstoffplatte werden nach der entsprechenden Schichtung in eine Presse gegeben und zusammengepresst. Die Dicke der Holzwerkstoffplatte wird dabei über die Presse eingestellt, die Dichte der Holzwerkstoff platte über die Menge der Holzwerkstoffe sowie die Menge des aufzuschäumenden Kunststoffes. Die Presse ist vorzugsweise beheizt, so dass der thermisch aktivierbare Kunststoff aufschäumt und sich ausdehnt. Dadurch wird das auf der Oberseite und der Unterseite befindliche Holzwerkstoffmaterial gegen die Presse gedrückt, wodurch an der Oberseite und an der Unterseite eine sehr hohe Dichte und dementsprechend eine sehr hohe Festigkeit der Holzwerkstoffe verwirklicht wird. In der Mitte zwischen den Holzwerkstoffschichten schäumt der Kunststoff auf und vergrößert das Volumen. Damit die herzustellende Holzwerkstoffplatte die gewünschte Dicke erhält, wird diese über die Presse eingestellt, indem während des Aufschäumens die Presse verriegelt ist, also die Plattendicke im Wesentlichen konstant bleibt. Alternativ dazu ist es möglich, dass die Presse leicht auseinander fährt, bis das gewünschte Sollmaß erreicht wird.

Nach Erreichen des Sollmaßes bzw. nach der Einstellung des Sollmaßes wird nach der Zufuhr der thermischen Energie die Presse auf diesem Sollmaß gehalten, bis der aufgeschäumte Kunststoff nicht mehr aktiv und vorzugsweise ausgehärtet ist. Durch das Halten in der Presse auf Sollmaß kann die Plattendicke exakt eingestellt werden.

Der Kunststoff wird als Granulat zwischen die als Werkstoffschichten, insbesondere Fasern oder Späne, eingestreut, wobei vorzugsweise eine gleichmäßige Streuung über die gesamte Breite und Länge der Platte erfolgt, was im Zuge der kontinuierlichen Plattenfertigung durch aufeinanderfolgendes Aufstreuen der entsprechenden Materialien möglich ist.

Um eine verbesserte Anbindung des aufgeschäumten Kunststoffes mit den Holzwerkstoffen zu erreichen, insbesondere bei Fasern oder Spänen, ist es vorgesehen, dass eine Mischung aus Holzwerkstoffen und Kunststoffgranulat zwischen die beiden äußeren Holzwerkstoffschichten aufgestreut wird, wodurch eine verbesserte Vernetzung gewährleistet ist.

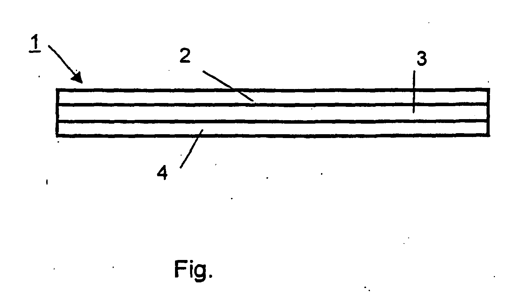

Die einzige Figur zeigt eine Holzwerkstoffplatte 1, an deren Oberseite eine erste Holzwerkstoffschicht 2 angeordnet ist. An der Unterseite ist eine zweite Holzwerkstoffschicht 4 vorhanden, zwischen den beiden Holzwerkstoffschichten 2, 4 ist eine Schicht 3 aus einem aufgeschäumten, ausgehärteten Kunststoff angeordnet. An den Seitenkanten der Holzwerkstoffe 1 können Verriegelungselemente vorhanden sein. Die Holzwerkstoffschichten 2, 4 können als Späne oder Holzfasern ähnlich der Herstellung einer Spanplatte, einer MDF-Platte oder einer OSB-Platte ausgebildet sein. Die Herstellung erfolgt, indem zunächst die zweite Holzwerkstoffschicht 4 aufgestreut wird, anschließend wird eine Schicht 3 aus Kunststoffgranulat aufgestreut, das durch Zufuhr thermischer Energie aufschäumbar ist. Als Deckschicht wird die zweite Holzwerkstoffschicht 2 aufgestreut und in eine kontinuierliche Heisspresse eingefahren. Dort werden die Schichten auf das Sollmaß verdichtet und der Kunststoff wird durch die zugeführte thermische Energie aufgeschäumt. Dadurch wird im Zentrum der Holzwerkstoffplatte 1 die Dichte verringert und ein Druck auf die Außenseiten der Holzwerkstoffplatte 1 aufgebracht, so dass die Schichten 2, 4 hoch verdichtet werden.

Die Kunststoffschicht 3 ist im ausgehärteten Zustand steif und ermöglicht aufgrund des geringeren spezifischen Gewichtes die Ausbildung einer leichten und steifen Holzwerkstoffplatte 1.

Die sichtbaren Oberflächen der Holzwerkstoffschichten 2, 4 können nach Dekorwünschen oder gemäß dem vorgesehenen Einsatzzweck beschichtet, bedruckt oder lackiert sein. Ebenfalls kann eine Furnierschicht aufgebracht sein, so dass sich die Holzwerkstoffplatte als Möbelwerkstoff eignet.

## Patentansprüche

1. Holzwerkstoffplatte mit einer Schicht aus aufgeschäumtem Kunststoff, die zwischen zwei Holzwerkstoffschichten aus Holzfasern oder Holzspänen angeordnet ist, wobei die Kunststoffschicht den Kern der Holzwerkstoffplatte bildet und die Ober- und Unterseite der Holzwerkstoffplatte aus Holzfasern oder Holzspänen ausgebildet sind **dadurch gekennzeichnet, dass** der Kern mit den Holzfasern oder Holzspänen vernetzt ist.

2. Holzwerkstoffplatte nach Anspruch 1, **dadurch gekennzeichnet, dass** der Kunststoff im ausgeschäumten Zustand geschlossenporig ausgebildet ist.

3. Holzwerkstoffplatte nach Anspruch 1 oder 2, **dadurch gekennzeichnet, dass** der Kunststoff mit den Holzwerkstoffschichten verbunden ist und aushärtet.

4. Holzwerkstoffplatte nach einem der vorstehenden Ansprüche, **dadurch gekennzeichnet, dass** der Kunststoff zumindest Anteile aus Polyethylen oder Polyurethan aufweist.

5. Holzwerkstoffplatte nach einem der voranstehenden Ansprüche, **dadurch gekennzeichnet, dass** der Kunststoff Flammschutzmittel, insbesondere Melaminharz, Aluminiumhydroxid oder Ammoniumpolyphosphat enthält.

6. Holzwerkstoffplatte nach einem der voranstehenden Ansprüche, **dadurch gekennzeichnet, dass** der Kunststoff thermisch aktivierbar ist.

7. Holzwerkstoffplatte nach einem der voranstehenden Ansprüche, **dadurch gekennzeichnet, dass** die Kunststoffschicht von Holzwerkstoff umgeben st.

8. Holzwerkstoffplatte nach einem der voranstehenden Ansprüche, **dadurch gekennzeichnet, dass** die Kunststoffschicht mittig in der Platte angeordnet ist.

9. Holzwerkstoffplatte nach einem der vorangehenden Ansprüche, **dadurch gekennzeichnet, dass** an den Seitenkanten Verriegelungseinrichtungen zum verbinden mehrerer Holzwerkstoffplatten ausgebildet sind.

10. Verfahren zum Herstellen einer Holzwerkstoffplatte gemäß Ansprüche 1 bis 9, **dadurch gekennzeichnet, dass** zwischen zwei Schichten aufgestreuter Holzfasern oder Holzspänen eine Schicht mit einem aufschäumenden, aushärtenden Kunststoffgranulat eingebracht und der Kunststoff unter Zufuhr thermischer Energie aufgeschäumt und die Holzfasern oder Späne verdichtet und die auf der Ober- und Unterseite der Holzwerkstoffplatte angeordneten Holzfasern oder Holzspäne mit dem aufgeschäumten Kunststoff vernetzt werden.

11. Verfahren nach Anspruch 10, **dadurch gekennzeichnet, dass** der Kunststoff auf einer ersten Holzwerkstoffschicht aufgebracht und von einer zweiter Holzwerkstoffschicht überdeckt wird, bevor der Kunststoff aufgeschäumt wird.

12. Verfahren nach Anspruch 10, **dadurch gekennzeichnet, dass** ein Span- oder Faserkuchen aufgestreut wird, dieser, insbesondere von einem Dampfschwert, geteilt und der Kunststoff in die Teilungsfuge eingebracht wird, bevor der Kunststoff aufgeschäumt wird.

13. Verfahren nach einem der Ansprüche 10 bis 12, **dadurch gekennzeichnet, dass** den Holzwerkstoffschichten und der Kunststoffschicht Wärme über Pressenplatten zugeführt wird.

14. Verfahren nach einem der Ansprüche 10 bis 13, **dadurch gekennzeichnet, dass** die Dicke der Holzwerkstoffplatte über eine Presse eingestellt wird.

15. Verfahren nach Anspruch 14, **dadurch gekennzeichnet, dass** die Presse während des Aufschäumens die Plattendicke im Wesentlichen konstant hält oder auf das Sollmaß auseinanderfährt.

16. Verfahren nach Anspruch 14 oder 15, **dadurch gekennzeichnet, dass** die Presse nach Erreichen des Sollmaßes der Holzwerkstoffplatte gehalten wird, bis der aufgeschäumte Kunststoff ausgehärtet ist.

17. Verfahren nach einem der voranstehenden Ansprüche 10 bis 16, **dadurch gekennzeichnet, dass** das Kunststoffgranulat gleichmäßig über die gesamte Breite und Länge der Holzwerkstoffplatte gestreut wird.

18. Verfahren nach einem der Ansprüche 10 bis 17, **dadurch gekennzeichnet, dass** eine Mischung aus Holzwerkstoff und Kunststoffgranulat zwischen zwei Holzwerkstoffschichten eingebracht wird.

## Claims

1. Wooden board having a layer of foamed plastic which is arranged between two layers of wooden material comprising wood fibers or wood chips, the plastic layer forming the core of the wooden board and the upper side and underside of the wooden board being formed from wood fibers or wood chips, **characterized in that** the core is crosslinked with the wood fibers or wood chips.

2. Wooden board according to Claim 1, **characterized in that** the plastic is designed to have closed pores in the foamed state.

3. Wooden board according to Claim 1 or 2, **characterized in that** the plastic is bonded to the layers of wooden material and cured.

4. Wooden board according to one of the preceding claims, **characterized in that** the plastic has at least proportions of polyethylene or polyurethane.

5. Wooden board according to one of the preceding claims, **characterized in that** the plastic contains flameproofing agents in particular melamine resin, aluminum hydroxide or ammonium polyphosphate.

6. Wooden board according to one of the preceding claims, **characterized in that** the plastic can be activated thermally.

7. Wooden board according to one of the preceding claims, **characterized in that** the plastic layer is surrounded by wooden material.

8. Wooden board according to one of the preceding claims, **characterized in that** the plastic layer is arranged centrally in the board.

9. Wooden board according to one of the preceding claims, **characterized in that** locking devices for joining a plurality of wooden boards are formed on the side edges.

10. Method for producing a wooden board according to Claims 1 to 9, **characterized in that** a layer having foaming, curing plastic granules is introduced between two layers of spread-out wood fibers or wood chips and the plastic is foamed by supplying thermal energy, and the wood fibers or chips are compressed and the wood fibers or wood chips arranged on the upper side and underside of the wooden board are crosslinked with the foamed plastic.

11. Method according to Claim 10, **characterized in that** the plastic is applied to a first layer of wooden material and covered by a second layer of wooden material before the plastic is foamed.

12. Method according to Claim 10, **characterized in that** a chip or fiber cake is spread out, this is then divided, in particular by a steamer blade, and the plastic is introduced into the divided joint before the plastic is foamed.

13. Method according to one of Claims 10 to 12, **characterized in that** heat is supplied to the layers of wooden material and the plastic layer via press platens.

14. Method according to one of Claims 10 to 13, **characterized in that** the thickness of the wooden board is set by a press.

15. Method according to Claim 14, **characterized in that**, during the foaming process, the press maintains the plate thickness substantially constant or moves apart to the intended dimension.

16. Method according to Claim 14 or 15, **characterized in that**, after reaching the intended dimension of the wooden board, the press is held until the foamed plastic has cured.

17. Method according to one of the preceding Claims 10 to 16, **characterized in that** the plastic granules are spread out uniformly over the entire width and length of the wooden board.

18. Method according to one of Claims 10 to 17, **characterized in that** a mixture of wooden material and plastic granules is introduced between two layers of wooden material.

## Revendications

1. Plaque en matériau à base de bois comportant une couche de matière synthétique mousseuse, qui est disposée entre deux couches de matériau à base de bois en fibre de bois ou copeaux de bois, la couche de matière synthétique composant l'âme de la plaque en matériau à base de bois tandis que le dessus et le dessous de la plaque en matériau à base de bois sont composés de fibres de bois ou de copeaux de bois, **caractérisée en ce que** l'âme est réticulée avec les fibres de bois ou les copeaux de bois.

2. Plaque en matériau à base de bois selon la revendication 1, **caractérisée en ce qu'**à l'état de mousse la matière synthétique est à pores fermés.

3. Plaque en matériau à base de bois selon la revendication 1 ou 2, **caractérisée en ce que** la matière synthétique est reliée et fait prise avec les couches de matériau à base de bois.

4. Plaque en matériau à base de bois selon l'une des revendications précédentes, **caractérisée en ce que** la matière synthétique comporte au moins une proportion de polyéthylène ou polyuréthane.

5. Plaque en matériau à base de bois selon l'une des revendications précédentes, **caractérisée en ce que** la matière synthétique contient un agent anti-feu, en particulier de la résine de mélanine, de l'hydroxyde d'aluminium ou du plolyphosphate d'ammonium.

6. Plaque en matériau à base de bois selon l'une des revendications précédentes, **caractérisée en ce que** la matière synthétique est activable thermiquement.

7. Plaque en matériau à base de bois selon l'une des revendications précédentes, **caractérisée en ce que** la couche de matière synthétique est entourée par du matériau à base de bois.

8. Plaque en matériau à base de bois selon l'une des revendications précédentes, **caractérisée en ce que** la couche de matière synthétique est placée au centre de la plaque.

9. Plaque en matériau à base de bois selon l'une des revendications précédentes, **caractérisée en ce que** des dispositifs de verrouillage sont façonnés sur les arrêtes latérales pour lier plusieurs plaques en matériau à base de bois.

10. Procédé pour fabriquer une plaque en matériau à base de bois selon l'une des revendications 1 à 9, **caractérisé en ce qu'**on interpose entre deux couches de fibres de bois ou de copeaux de bois déposés par éparpillement une couche avec des granulés de matière synthétique capable de mousser et de durcir , on fait mousser la matière synthétique par apport d'énergie thermique et les copeaux ou les fibres de bois sont comprimés, et les fibres de bois ou copeaux de bois se trouvant sur le dessus ou le dessous de la plaque en matériau à base de bois sont réticulés avec la matière synthétique passée à l'état de mousse.

11. Procédé selon la revendication 10, **caractérisé en ce que** la matière synthétique est appliquée sur une première couche de matériau à base de bois puis recouverte par une deuxième couche de matériau à base de bois avant de faire mousser la matière synthétique.

12. Procédé selon la revendication 10, **caractérisé en ce qu'**on dépose un gâteau de copeaux de bois ou de fibres de bois par éparpillement et on le divise en particulier au moyen d'un couteau à vapeur, et on injecte la matière synthétique dans le joint, avant qu'on ne fasse mousser la matière synthétique.

13. Procédé selon l'une des revendications 10 à 12, **caractérisé en ce qu'**on apporte de la chaleur aux couches de matériaux à base de bois et à la couche de matière synthétique par l'intermédiaire de plaques presseuses.

14. Procédé selon l'une des revendications 10 à 13, **caractérisé en ce qu'**on ajuste l'épaisseur de la plaque en matériau à base de bois au moyen d'une presse.

15. Procédé selon la revendication 14, **caractérisé en ce que** pendant le moussage la presse maintient sensiblement constante l'épaisseur de la plaque ou bien s'écarte à la cote nominale.

16. Procédé selon la revendication 14 ou 15, **caractérisé en ce qu'**on maintient la presse après l'arrivée à la cote nominale de la plaque en matériau à base de bois, jusqu'à ce que la matière synthétique ayant moussé fasse prise.

17. Procédé selon l'une des revendications précédentes 10 à 16, **caractérisé en ce qu'**on éparpille régulièrement le granulé de matière synthétique sur toute la largeur et la longueur de la plaque en matériau à base de bois.

18. Procédé selon l'une des revendications 10 à 17, **caractérisé en ce qu'**on interpose un mélange de matériau à base de bois et de granulé de matière synthétique entre deux couches de matériau à base de bois.
